# EUROPÄISCHE PATENTANMELDUNG

(11) **EP 1 111 214 A2**
(43) Veröffentlichungstag der Anmeldung: **27.06.2001**
(21) Anmeldenummer: 00126228.6
(22) Anmeldetag: 30.11.2000
(51) Int. Cl.: F01P 7/16, F01P 3/20

(54) **Kühl-Heiz-Kreis mit zwei Kühlern**

(30) Priorität: 21.12.1999 DE 19961825
(71) Anmelder: Valeo Klimasysteme GmbH, 96476 Rodach (DE)
(72) Erfinder: Khelifa, Noureddine, Dr., 96450 Coburg (DE)
(74) Vertreter: Hofmann, Harald

(57) **Zusammenfassung**

Kühl-Heiz-Kreis für ein Fahrzeug mit zumindest zwei Teilkreisen (20, 30), die zumindest abschnittsweise bei unterschiedlichen Temperaturen vorliegen und jeweils zumindest einen Kühler (21, 31) enthalten, um jeweils zumindest ein Aggregat (10, 22, 23, 24, 25, 32, 33) zu kühlen, wobei die Teilkreise (20, 30) strömungsmechanisch miteinander gekoppelt sind.

## Beschreibung

Die vorliegende Erfindung betrifft allgemein einen Kühl-Heiz-Kreis für ein Fahrzeug und insbesondere, jedoch nicht ausschließlich für ein Fahrzeug mit einem durch eine Brennstoffzelle gespeisten Elektromotor.

In generell üblicher Weise umfaßt ein Kühl-Heiz-Kreis einen Kühler, der dazu dient, Wärme an die Umgebung abzugeben. Das zu kühlende Aggregat, wie z.B. der Motor oder auch eine Brennstoffzelle, wird zu diesem Zweck, sei es nun unmittelbar oder unter Zwischenschaltung eines weiteren Wärmeübertragerkreises, mit einem Kühlmittel in thermische Wechselwirkung gebracht, wobei das Fluid üblicherweise durch eine mechanisch oder elektromotorisch angetriebene Pumpe in dem Kühl-Heiz-Kreis gefördert wird. Für die Beheizung des Kraftfahrzeuginnenraumes ist klassischer Weise ein Wärmetauscher entweder direkt in dem Kühl-Heiz-Kreis integriert, wobei jedoch auch bereits Lösungen bekannt geworden sind, bei denen für Heizzwecke ein Sekundärkreis vorgesehen ist, der die Wärme von dem Kühl-Heiz-Kreis zu einem Heizkörper überträgt. Solch eine Anordnung ist beispielhaft in der EP-0 638 712 beschrieben.

In letzter Zeit hat sich jedoch herausgestellt, daß insbesondere bei Elektrofahrzeugen mit einer Brennstoffzelle, die über eine hohe mechanische Antriebsleistung verfügen, die gesamte abzuführende Wärmeleistung nicht oder nur unter erheblichem Aufwand durch einen einzelnen Kühler abgekühlt werden kann. Bei den zuvor genannten Fahrzeugen besteht nämlich ein frappierender Unterschied zu verbrennungsmotorisch angetriebenen Fahrzeugen, da Abwärme nicht oder nur in minimalem Umfang über das Abgas abgeführt werden kann. Ein weiteres Problem ergibt sich aus der Tatsache, daß neben der hohen abzuführenden thermischen Leistung bei geringem Bauraum unterschiedlichste Temperaturniveauanforderungen für die einzelnen zu kühlenden Aggregate vorliegen. So liegt z.B. derzeit die Betriebstemperatur einer Brennstoffzelle bei etwa 80 °C, während in dem Kühl-Heiz-Kreis integrierte Kondensatoren, z.B. für Abgase oder auch eine zugeschaltete Klimaanlage deutlich niedrigere Temperaturen erfordern.

Daher wurden in der letzten Zeit Kühl-Heiz-Kreis-Systeme entwickelt, die über zwei Teilkreise verfügen, welche zumindest abschnittsweise bei unterschiedlichen Temperaturen vorliegen, und jeweils zumindest einen Kühler enthalten, um jeweils zumindest ein Aggregat zu kühlen. Solch ein gattungsgemäßer Kühl-Heiz-Kreis gemäß dem Oberbegriff des Anspruches 1 ist offenbart in "Wärmeübertrager im Brennstoffzellenfahrzeug - neue Anwendungen und Anforderungen "Brennstoffzellenfahrzeuge, Haus der Technik, 30.11.1999". Bei dem hier bekannt gewordenen Konzept dient ein Hochtemperaturkühlmittelkreislauf zur Kühlung der Brennstoffzelle und des Ladeluftkühlers, sofern dieser als flüssigkeitsgekühlter Wärmeübertrager ausgeführt ist, während ein Niedertemperatur-Kreislauf den Abgaskondensator, sowie ggf. weitere elektronische Bauteile kühlt. Jeder der Kreise verfügt über einen separaten Kühler, wobei der Niedertemperaturkühler luftströmungstechnisch dem Hochtemperaturkühler vorgeschaltet ist. Nachdem jedoch generell in Fahrzeugen der zur Verfügung stehende Bauraum sehr beschränkt ist, besteht sowohl ein Problem bei der Integration als auch bei der Wärmeabfuhr in einem Fahrzeug, da für jeden Teilkreis separate Steuer- und Antriebsmittel erforderlich sind. Demzufolge ist, wie auch von den Verfassern angegeben, die beschriebene Lösung lediglich als Konzeptvorschlag zu verstehen, wobei auch einschränkend darauf hingewiesen wird, daß generell wohl nur eine Lösung für Brennstoffzellenfahrzeuge auf der Basis kleiner Klassen realisierbar ist.

Es ist daher Aufgabe der vorliegenden Erfindung, eine Kühl-Heiz-Kreis anzugeben, der bei reduzierten Einbauraumforderungen auch in Fahrzeuge gehobener Klassen, insbesondere mit hoher mechanischer Leistung integriert werden kann.

Erfindungsgemäß wird die obige Aufgabe bei einem gattungsgemäßen Kühl-Heiz-Kreis mit zumindest zwei Teilkreisen, die zumindest abschnittsweise bei unterschiedlichen Temperaturen vorliegen und jeweils zumindest einen Kühler enthalten, um jeweils zumindest ein Aggregat zu kühlen, dadurch gelöst, daß die Teilkreise strömungsmechanisch miteinander gekoppelt sind. Anders ausgedrückt, besteht zumindest bezüglich der Strömungen in den involvierten Teilkreisen eine wechselseitige Beziehung, so daß sich eine vereinfachte gemeinsame Steuerung und/oder ein weniger Bauraum erfordernder Fluidantrieb der jeweiligen Teilkreise gegeben ist. Eventuell vorliegende weitere Hilfskreise, z.B. ein thermodynamischer Klimaanlagen-Kreislauf, ein klassischer und/oder thermodynamischer Heiz-Kreislauf und dergleichen können wahlweise mit einem der Teilkreise gekoppelt werden, wobei diese zusätzlichen Kreise nicht als Teilkreise, wie in der vorliegenden Beschreibung und den beiliegenden Ansprüchen definiert, zu verstehen sind.

Vorteilhafterweise erfolgt die Kopplung der Teilkreise wahlweise über eine gemeinsame Pumpe, zwei Pumpen mit einem gemeinsamen Antrieb oder auch über eine Einrichtung, die, ausgehend von der Strömung, in einem Teilkreis eine Strömung in einem anderen Teilkreis bewirkt. Der Einsatz von lediglich einer Pumpe ermöglicht zwar eine Ausgestaltung mit minimaler Bauraumanforderung, jedoch kann auch bereits in erheblichem Maße Bauraum eingespart werden, wenn zwei Pumpen verwendet werden, die über einen gemeinsamen Antrieb verfügen. Neben der mittels einer oder mehrerer Pumpen erfolgenden Kopplung besteht eine Vielzahl an weiteren Möglichkeiten, durch die die Fluidströmung in einem Kreis, eine Fluidströmung in einem anderen Kreis bewirkt werden kann. Lediglich beispielhaft sollen hier Mittel angeführt werden, die im wesentlichen auf dem Prinzip einer Saugstrahlpumpe basieren, wie auch eine Turbine, die in einem der Teilkreise angeordnet eine mechanische Kraftübertragung zu einem Fördermittel in einem anderen Teilkreis erlaubt.

Bei einer bevorzugten Ausführungsform besteht neben der strömungstechnischen Kopplung auch eine thermische Kopplung, so daß eine Temperaturübertragung ermöglicht ist, wobei hierbei insbesondere ein gemeinsamer Leitungsabschnitt zum Einsatz kommen kann. Durch die Möglichkeit eines Temperaturübertrages von einem Teilkreis auf einen anderen, insbesondere von einem Teilkreis mit niederer Temperatur zu einem Teilkreis mit höherer Temperatur, wird es vorteilhafterweise ermöglicht, thermische Spitzen in dem Teilkreis mit höherer Temperatur auszugleichen oder in diesem einen Bereich mit mittlerer Temperatur bereitzustellen. Es ist zu erwähnen, daß die thermische Kopplung sowohl durch eine Vermengung von Fluid als auch ohne Fluidaustausch, z.B. mittels eines Wärmeübertragers, dargestellt werden kann.

Um den jeweiligen Betriebszuständen der zu kühlenden Aggregate und/oder Teilkreise Rechnung tragen zu können, kann man die strömungstechnische Kopplung und/oder die Temperaturübertragung zwischen den Teilkreisen steuerbar ausgestalten. Diese Steuerung kann in besonders einfacher Weise durch einstellbare Ventile realisiert werden, wobei jedoch auch andere Mittel, wie z.B. Getriebe mit verschiedenen Übersetzungsstufen, für z.B. den Fall möglich sind, wenn zwei Pumpen vorgesehen sind, die über einen gemeinsamen Antrieb verfügen.

Bei einer insbesondere bevorzugten Ausführungsform erfolgt die strömungsmechanische und/oder Temperaturkopplung in der Form, daß ein Teilkreis als Regelkreis für den anderen Teilkreis vorliegt. Wenn z.B. ein Niedertemperaturkreis als Regelkreis für einen Hochtemperaturkreis vorgesehen ist, kann durch ein entsprechend angeordnetes Dosierventil Fluid von einem Temperaturkreis mit hoher Temperatur entnommen werden, um in dem Teilkreis mit niedriger Temperatur deutlich abgekühlt zu werden, so daß dieses bei einer niedrigeren Temperatur vorliegende Fluid erneut in den ursprünglichen Teilkreis eingespeist werden kann.

Bei einer insbesondere bevorzugten Ausführungsform der vorliegenden Erfindung umfaßt zumindest eines der zu kühlenden Aggregate eine Brennstoffzelle, welche beispielhaft unter Zwischenschaltung eines Wärmeübertragers einem der Teilkreise zugeordnet ist. Die meisten derzeit verfügbaren Brennstoffzellen erfordern den Einsatz von deionisiertem Wasser, so daß derzeit ein Hilfskreis mit einem Wärmeübertrager zum Einsatz kommt.

Ferner ist es von Vorteil, wenn zumindest eines der zu kühlenden Aggregate einen Klimaanlagenkondensator darstellt, welcher insbesondere an der kühlsten Stelle des Kühl-Heiz-Kreises angeordnet ist. Bekanntermaßen erfordern Klimaanlagenkondensatoren ein relativ niederes Temperaturniveau, weshalb man meist bisher darauf verzichtet hat, in Brennstoffzellen-Fahrzeugen eine Klimaanlage vorzusehen. Nachdem jedoch nunmehr auch Fahrzeuge der gehobenen Klasse mit entsprechend hoher Motorleistung gefordert werden, ist es fahrzeugkomforttechnisch erforderlich, für solche Fahrzeuge eine Klimaanlage bereitzustellen.

Vorteilhafterweise sind zumindest zwei, insbesondere jeweils zwei zu kühlende Aggregate aus der Gruppe Ladeluftkühler, Brennstoffzelle bzw. Brennstoffzellenwärmeübertrager, Abgaskondensator und Brennstoffkühler in einem Teilkreis unmittelbar in Serie geschaltet. So ist es z.B. insbesondere von Vorteil, wenn Ladeluftkühler und Brennstoffzellen unmittelbar in Serie geschaltet sind, da die der Brennstoffzelle zuzuführende Luft im Idealfall annähernd die Betriebstemperatur der Brennstoffzelle aufweist. Für den Brennstoffkühler gilt entsprechendes, so daß ein In-Serie-Schalten mit dem Ladeluftkühler und/oder der Brennstoffzelle einen Vorteil darstellt.

Vorteilhafterweise sind zumindest zwei, insbesondere drei, zu kühlende Aggregate, die geringe thermische Leistung bereitstellen, und/oder eine niedriges Temperaturniveau erfordern, parallel geschaltet in einem der Teilkreise vorgesehen. Insbesondere können diese Aggregate ein Ladeluftkühler, ein Klimaanlagenkondensator, ein Brennstoffkühler, ein Inverter oder auch der Elektromotor selbst sein.

Nachdem bestimmte zu kühlende Aggregate, wie z.B. der Klimaanlagenkondensator, der Abgaskondensator und der Ladeluftkühler relativ niedrige Temperaturen und/oder relativ geringe Kühlleistung erfordern, ist es bevorzugte, daß zumindest eines, insbesondere zwei der zuvor genannten Aggregate dem zu kühlenden Aggregat mit der höchsten thermischen Leistung, welches im Fall eines Brennstoffzellenfahrzeuges üblicherweise die Brennstoffzelle sein wird, vorgeschaltet ist bzw. sind.

Um in optimaler Weise die unterschiedlichen Temperaturniveaus der strömungstechnisch gekoppelten Teilkreise, die optional auch bedingt thermisch gekoppelt sind, ausnutzen zu können, ist es bevorzugt, daß zumindest ein, insbesondere zwei, zu kühlende(s) Aggregat(e) mit geringer thermischer Leistung und/oder die eine relativ niedrige Temperatur erfordern, z.B. ausgewählt aus der Gruppe Klimaanlagenkondensator, Abgaskondensator und Ladeluftkühler, in einem Teilkreis angeordnet, der nicht das zu kühlende Aggregat mit der höchsten thermischen Leistung enthält.

Schließlich ist es bevorzugt, daß die Kühler von unterschiedlichen Teilkreisen in voneinander getrennten Luftkanälen angeordnet sind. Z.B. wäre es in dem Fall von zwei Teilkreisen möglich, den Kühler des Niedertemperaturteilkreises dezentral, d.h. .an einem anderen Ort als den klassischen Kühler in bekannten Fahrzeugen anzuordnen.

Weitere Vorteile und Merkmale der Erfindung ergeben sich aus der folgenden, rein illustrativen und die Erfindung nicht einschränkenden Beschreibung einiger derzeit bevorzugter Ausführungsformen, welche unter Bezugnahme auf die beiliegenden Zeichnungen erfolgt, in welchen gilt:
- Fig. 1: zeigt systematisch einen Kühl-Heiz-Kreis als bevorzugte Ausführungsform der vorliegenden Erfindung.
- Fig. 2: zeigt eine leicht modifizierte Ausführungsform zu Fig. 1.
- Fig. 3: zeigt eine Ausführungsvariante zu Fig. 1.
- Fig. 4: zeigt eine alternative, bevorzugte Ausführungsform eines erfindungsgemäßen Kühl-Heiz-Kreises.
- Fig. 5: zeigt noch eine weitere Variante zu den Fig. 1 bis 4.
- Fig. 6: zeigt im Detail eine mögliche strömungsmechanische Kopplung zwischen Teilkreisen, basierend auf dem Prinzip einer Saugstrahlpumpe.
- Fig. 7: zeigt eine bevorzugte Ausführungsform eines erfindungsgemäßen Kühl-Heiz-Kreises, wobei ein Teilkreis als Regelkreis für einen anderen Teilkreis ausgebildet ist.
- Fig. 8: zeigt eine Ausführungsvariante zu Fig. 7.
- Fig. 9: zeigt noch eine weitere bevorzugte Ausführungsform.

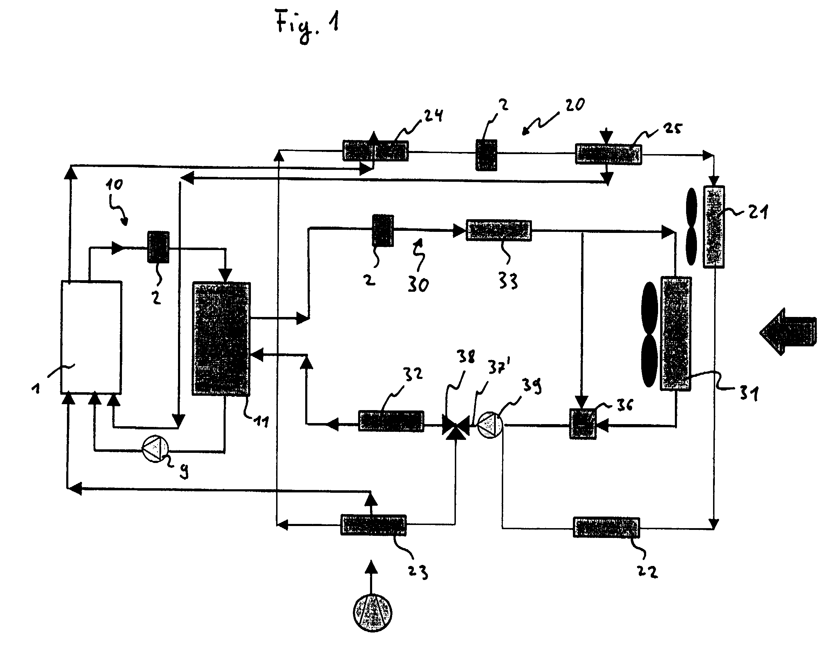

In Fig. 1 ist der systematische Aufbau einer bevorzugten Ausführungsform eines erfindungsgemäßen Kühl-Heiz-Kreises dargestellt. Der hier dargestellte Kühl-Heiz-Kreis ist für ein Brennstoffzellenfahrzeug vorgesehen, und dient daher in erster Linie dazu, eine Brennstoffzelle 1 zu kühlen. Die Brennstoffzelle 1 bildet mit einem Leitungssystem, einer Pumpe 9, einem Ausgleichsbehälter 2 und einem Wärmeübertrager 11 ein zu kühlendes Aggregat. Derzeit am Markt verfügbare Brennstoffzellen werden bei Temperaturen zwischen 80 °C und 85 °C betrieben, wobei eine abzuführende thermische Leistung vorliegt, die in etwa der gewinnbaren elektrischen Leistung entspricht. Um somit das die Brennstoffzelle 1 enthaltende Aggregat 10 zu kühlen, ist an den Wärmeübertrager 11 ein erster Teilkreises 30 angeschlossen, welcher über einen Kühler 31 verfügt. Der Kühler 31 wird in klassischer Weise mit Umgebungsluft beaufschlagt, wobei in üblicher Weise ein Lüfter vorgesehen ist, um einen ausreichenden Luftaustausch zu gewährleisten. Das aus dem Kühler 31 austretende Fluid sollte maximal bei einer Temperatur von 75 °C, bevorzugt bei etwa 60 °C vorliegen. Das in dem ersten Teilkreis 30 enthaltende Fluid, welches z.B. eine Glukol-Wassermischung sein kann, wird durch eine Förderpumpe 39 bewegt.

In der in Fig. 1 dargestellten Ausführungsform enthält der erste Teilkreis 30 ferner einen Ausgleichsbehälter 2, den zu kühlenden Elektromotor 32, einschließlich des ihm zugeordneten Inverters, sowie einen Heiz-Wärmetauscher 33, mit dem der Fahrzeuginnenraum beheizt werden kann. Schließlich enthält der erste Teilkreis 30 noch eine Bypassleitung, die über ein Thermo-Drei-Wege-Ventil 36 gesteuert werden kann, um es während einer Startphase des Fahrzeuges zu ermöglichen, daß die Brennstoffzelle 1 schneller die gewünschte Betriebstemperatur erreicht.

Der in Figur 1 dargestellte Kühl-Heiz-Kreis umfaßt ferner einen zweiten Teilkreis 20, der mit einem dezentralen Kühler 21 versehen ist, d.h., daß der Kühler 21 luftströmungstechnisch nicht mit dem Kühler 31 des ersten Teilkreises wechselwirkt. Dem Kühler 21 ist der Kondensator 22 einer nicht dargestellten Klimaanlage nachgeschaltet. Nachdem das Fluid des zweiten Teilkreises 20, welches im vorliegenden Fall zu dem Fluid in dem ersten Teilkreis 20 identisch ist, durch den Kondensator 22 getreten ist, wird es flußaufwärtsliegend der Pumpe 39 des ersten Teilkreises 30 in diesen eingespeist, so daß die Pumpe 39 saugseitig sowohl den ersten Teilkreis 30 als auch den zweiten Teilkreis 20 beaufschlagt. Nach der Pumpe 39 verzweigen sich die zwei Teilkreise 20, 30 erneut, wobei in der dargestellten Ausführungsform ein Dosier-3-Wege-Ventil 38 vorgesehen ist, welches es ermöglicht, das Fluid in gesteuerter Weise auf die zwei Teilkreise zu verteilen. Zwischen dem Dosierventil 38 und der Pumpe 39 fließen die zwei Teilströme in einem gemeinsamen Leitungsabschnitt 37', so daß nach dem Dosier-Ventil 38 beide Teilkreise im wesentlichen dieselbe Temperatur aufweisen, wobei diese Temperatur in einem Bereich zwischen den Austrittstemperaturen der zwei Kühler 21, 31 liegt, vorteilhafterweise bei einer Temperatur von weniger als 60 °C.

Das Fluid des zweiten Teilkreises 20 tritt anschließend durch einen Ladeluftkühler 23, der dazu bestimmt ist, die zur Speisung der Brennstoffzelle 1 dienende Luft abzukühlen, die vorangehend verdichtet und demzufolge erwärmt wurde. Anschließend tritt das Fluid, welches durch den Ladeluftkühler nur geringfügig erwärmt wurde, da dieser üblicherweise eine thermische Leistung von 5 kW bereitstellt, in einen Abgaskondensator 24, der dazu vorgesehen ist, die aus der Brennstoffzelle 1 austretende Luft abzukühlen, so daß der aus der Brennstoffzelle aufgenommene Dampf kondensiert werden kann (zum Einsatz im Steamreforming bei der Aufbereitung des Brennstoffes für die Brennstoffzelle). Nach Durchtritt des Abgaskondensators 24 erreicht das Fluid einen Ausgleichsbehälter 2, und schließlich einen Brennstoffkühler 25, bevor sich der zweite Teilkreis 20 hin zu dem Kühler 21 schließt. Der Brennstoffkühler 25 ist vorgesehen, um den Brennstoff, der z.B. aus einem Steam-Reforming-Prozeß stammt, auf die Betriebstemperatur der Brennstoffzelle 1 abzukühlen.

Das in Figur 1 dargestellte Konzept ermöglicht es somit, unter Einsatz von lediglich einer Pumpe 39 die unterschiedlichen zu kühlenden Aggregate bei den gewünschten Temperaturen und mit der erforderlichen Kühlleistung vorzusehen. Im einzelnen ist es möglich, den Kondensator 22 der Klimaanlage bei Temperaturen von unter 60 °C und den Abgaskondensator bei Temperaturen um bzw. unter 60 °C zu halten. Im folgenden werden rein beispielhaft Temperatur- und Leistungswerte für die unterschiedlichen Aggregate in den einzelnen Teilkreisen 20, 30 angegeben. In dem ersten Teilkreis 30 liegt austrittsseitig des Kühlers 31 eine Temperatur von etwa 60 °C vor. Der Elektromotor 32 mit zugeordnetem Inverter stellt eine thermische Leistung von etwa 20 kW bereit, so daß anschließend eine Temperatur von unter etwa 70 °C vorliegt. In dem Wärmeübertrager 11 steht eine thermische Leistung von etwa 60 kW an, so daß austrittsseitig eine Temperatur von etwa 80 °C vorliegt. Diese Temperatur ist für den Heiz-Wärmetauscher ausreichend, um den Fahrzeuginnenraum ggf. zu erwärmen. Die kumulative Heizleistung in dem ersten Teilkreis 30 beträgt somit etwa 80 kW; diese thermische Leistung kann durch verfügbare Kühler abgeführt werden, so daß für den Kühler 31 ein Standardkühler zum Einsatz kommen kann.

In dem zweiten Teilkreis liegt die Austrittstemperatur des Kühlers 21 auf einem leicht niedrigeren Niveau, z.B. bei etwa 45 °C. Diese Temperatur ermöglicht es, in geeigneter Weise Wärme von dem Kondensator 22 der Klimaanlage abzuführen. Der Kondensator 22 stellt eine thermische Leistung von ca. 10 kW bereit, so daß die Kühlflüssigkeit, die flußaufwärts liegend der Pumpe 39 in den ersten Teilkreis 30 gespeist wird, bei einer Temperatur liegt, die unterhalb jener des Austrittsendes des Kühlers 31 liegt. An dem Steuer-3-Wege-Ventil 38 wird wiederum ein Teil der Kühlflüssigkeit entnommen, wobei durch den gemeinsamen Leitungsabschnitt 37' eine homogene Temperatur vorliegt, die ebenfalls unterhalb der Austrittstemperatur des Kühlers 31 liegt. Beispielhaft kann somit in dem Teilkreis 20 nach der Verzweigung bei einer Temperatur von etwa 55 °C vorliegen. Der Ladeluftkühler 23 stellt eine thermische Leistung von etwa 5 kW dar, so daß die danach vorliegende Temperatur unter 60 °C liegt, wobei diese Temperatur gut geeignet ist, um den Abgaskondensator in zufriedenstellender Weise zu kühlen. Der Abgaskondensator stellt eine thermische Leistung von etwa 20 kW bereit, so daß nach demselben eine Temperatur von etwa 70 °C vorliegt. Bevor die Kühlflüssigkeit nun erneut den Kühler 21 erreicht, tritt sie noch durch den Brennstoffkühler 25, der in etwa eine thermische Leistung von 1 kW bereitstellt. Der Fachmann wird erkennen, daß das Gesamtkonzept demzufolge eine verbesserte Handhabung der abzuführenden thermischen Leistung gewährleistet, wobei lediglich minimaler Raumbedarf besteht, insbesondere da lediglich eine Pumpe zum Antrieb beider Teilkreise 20, 30 erforderlich ist. Das Dosier-3-Wege-Ventil 38 ermöglicht es zudem, das Gesamtsystem auf die unterschiedlichsten Betriebszustände der einzelnen zu kühlenden Aggregate abzustimmen, so daß in dem zweiten Teilkreis 20 zur Verfügung stehende Kühlleistung auf den ersten Teilkreis 30 übertragen werden kann und vice versa.

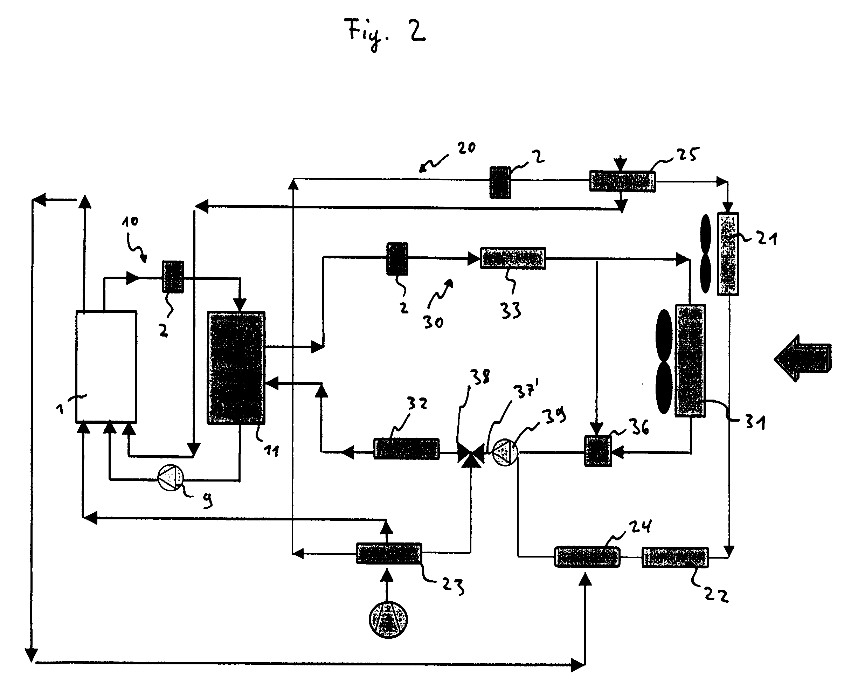

In Fig. 2 ist eine leicht modifizierte Ausführungsform zu der in Fig. 1 gezeigten dargestellt. Der prinzipielle Aufbau des in Fig. 2 gezeigten Kühl-Heiz-Kreises entspricht im wesentlichen dem in Fig. 1 gezeigten, so daß eine wiederholte Beschreibung der einzelnen Aggregate und Bestandteile, insoweit übereinstimmend und wie auch für die Beschreibung der weiteren Figuren, nicht wiederholt werden soll. Im Gegensatz zu Fig. list bei der in Fig. 2 gezeigten Ausführungsform der Abgaskondensator nach dem Kondensator 22 für die Klimaanlage angeordnet. Durch die Anordnung des Abgaskondensators 24 in diesem Teilabschnitt des Teilkreises 20, welcher in jedem Fall über eine niedrigere Temperatur verfügt als der Teilkreis 30, kann immer eine zufriedenstellende Kondensation der Abgase erhalten werden, selbst, wenn die Brennstoffzelle im Maximallastbereich betrieben wird und die Temperatur des ersten Teilkreises 30 insgesamt bei leicht erhöhten Temperaturen vorliegt, wenn verglichen mit dem vorangehend beschriebenen.

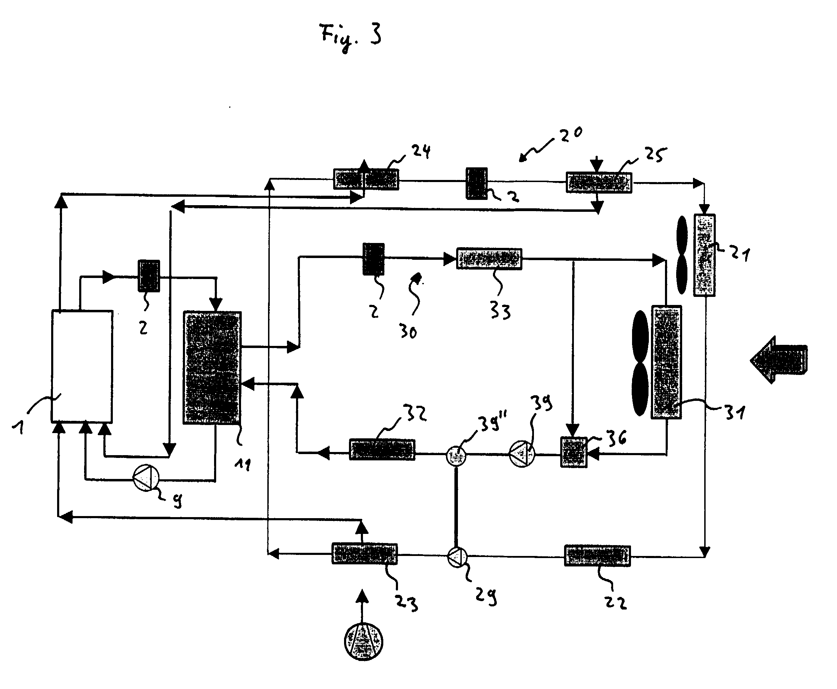

Fig. 3 zeigt eine weitere bevorzugte Ausführungsform eines bevorzugten Kühl-Heiz-Kreises, wobei, wie bei den beiden vorangegangenen Ausführungsformen ein erster Teilkreis 30 mit entsprechenden Aggregaten und ein zweiter Teilkreis 20 ebenfalls mit entsprechenden Aggregaten vorgesehen ist. Im Gegensatz zu den vorangegangenen Ausführungsformen erfolgt jedoch keine Vermischung zwischen den Fluiden der zwei Teilkreise, so daß bei dieser Ausführungsform in den beiden Teilkreisen 20, 30 auch unterschiedliche Kühlmittel zum Einsatz kommen können. Erfindungsgemäß besteht jedoch eine strömungstechnische Kopplung zwischen beiden, indem nach der Pumpe 39 des ersten Teilkreises 30 eine Turbine 39" angeordnet ist, die durch mechanische Kraftübertragung ein Fördermittel 29 in dem zweiten Teilkreis 20 antreiben kann. Der Fachmann sollte verstehen, daß zwischen der Turbine 39" und dem Fördermittel 29 ein Übersetzungsgetriebe (nicht dargestellt) vorgesehen sein kann, um eine gesteuerte strömungstechnische Kopplung zu bewirken. Die in Figur 3 dargestellte Ausführungsform hat neben den möglichen unterschiedlichen Fluide noch den Vorteil, daß die Temperatur in dem zweiten Teilkreis 20 sich insgesamt auf einem niedrigeren Niveau halten läßt, wobei jedoch dies auch zur Folge hat, daß Leistungsspitzen in dem ersten Teilkreis 30 nicht durch Kühlleistung des zweiten Teilkreises 20 abgedeckt werden können.

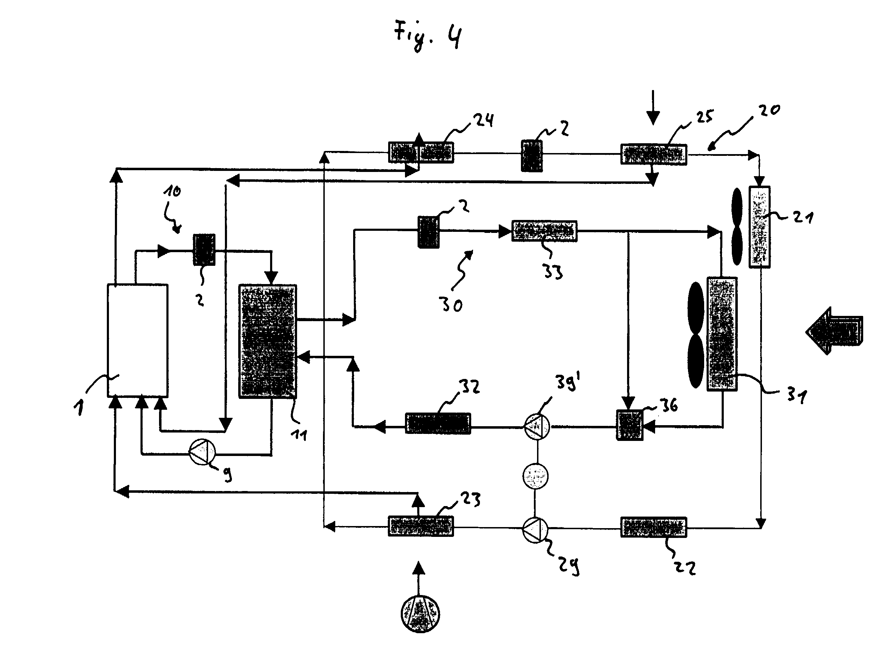

Bei der in Figur 4 dargestellten Ausführungsform ist die strömungsmechanische Kopplung durch zwei Pumpen 29, 39' gebildet, die mittels eines gemeinsamen Antriebes die jeweiligen Fluide beaufschlagen können. Wie auch bei der in Figur 3 gezeigten Ausführungsform kann zwischen dem Antrieb und zumindest einer oder auch beiden jeweiligen Pumpen ein Übersetzungsgetriebe vorgesehen sein, um in steuerbarer Weise die Strömungsgeschwindigkeiten in beiden Teilkreisen einstellen zu können. Bei dieser Ausführungsform wird die Bauraumeinsparung maßgeblich durch den gemeinsamen Antrieb der zwei Pumpen 29, 39' erzielt, wobei ansonsten thermodynamisch dieselben Vorteile wie bei der in Figur 3 gezeigten Ausführungsform erhalten werden.

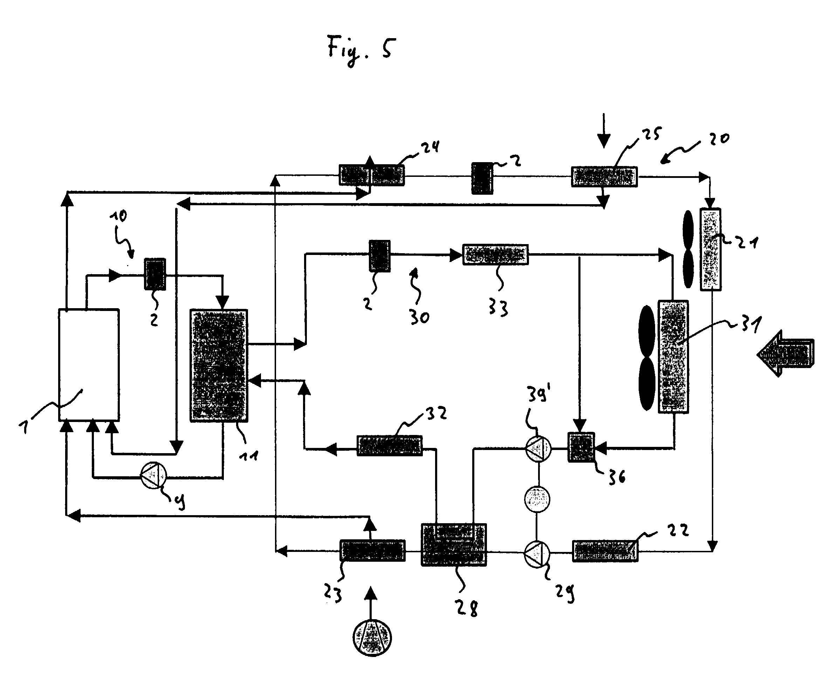

Die in Figur 5 dargestellte Ausführungsform stellt eine leichte Abwandlung zu der in Figur 4 gezeigten Ausführungsform dar. Bei dieser Ausführungsform besteht neben der strömungsmechanischen Kopplung auch noch eine thermische Kopplung, ohne daß jedoch eine Vermischung der Fluide stattfindet. Um die thermische Kopplung bereitzustellen, wechselwirken die zwei Teilkreise 20, 30 mittels eines Wärmeübertragers 28. Somit ermöglicht es diese Ausführungsform, unterschiedliche Fluide in den Teilkreisen zu verwenden, wobei jedoch im Gegensatz zu den Ausführungsformen gemäß Figuren 3 und 4 thermische Spitzen in dem Teilkreis 30 durch Kühlleistung des Teilkreises 20 abgedeckt werden können. Um unabhängig von Betriebszuständen eine zufriedenstellende Kondensation des Abgaskondensators 24 sicherzustellen, könnte dieser ggf., wie bei der Ausführungsvariante gemäß Figur 2, angeordnet sein, d.h. bevor die thermische Wechselwirkung zwischen den zwei Teilkreisen 20, 30 auftritt.

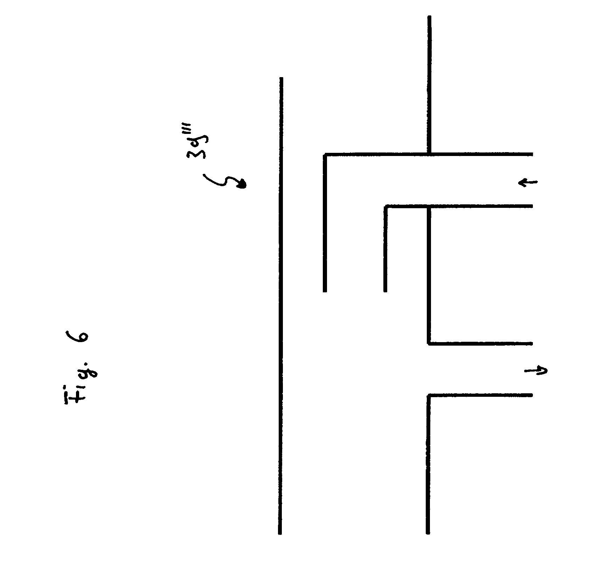

Figur 6 zeigt in einer Teilansicht eine weitere Möglichkeit, die Teilkreise 20, 30 strömungstechnisch und thermisch miteinander zu koppeln. Die in Figur 6 gezeigte Einrichtung basiert auf dem Prinzip einer Wasserstrahlpumpe. Anders ausgedrückt, wird ein Leitungsabschnitt des zweiten Kühlkreises 30 nach der Pumpe 39 in den ersten Teilkreis 30 in solch einer Weise eingespeist, daß die Strömung in dem Teilkreis 30 eine Sogwirkung für den Teilkreis 20 bereitstellt. In einem Teil der gemeinsamen Leitung, der weiter stromabwärts liegt, kann dann eine erneute Abzweigung stattfinden. In der gezeigten Ausführungsform ist diese Abzweigung einfach in der Form eines Leitungsdurchbruches dargestellt, es wäre jedoch auch möglich, hier eine Anordnung ähnlich zu der Einspeisung vorzusehen, so daß einem eventuell vorliegenden Strömungsprofil oder Temperaturprofil Rechnung getragen werden kann. Beispielhaft würde eine fluchtende Ausrichtung der Zufuhröffnung und der Abfuhröffnung dazu führen, daß Fluid bei einer niedrigen Temperatur eingespeist und bei einer relativ niedrigen Temperatur entnommen werden kann.

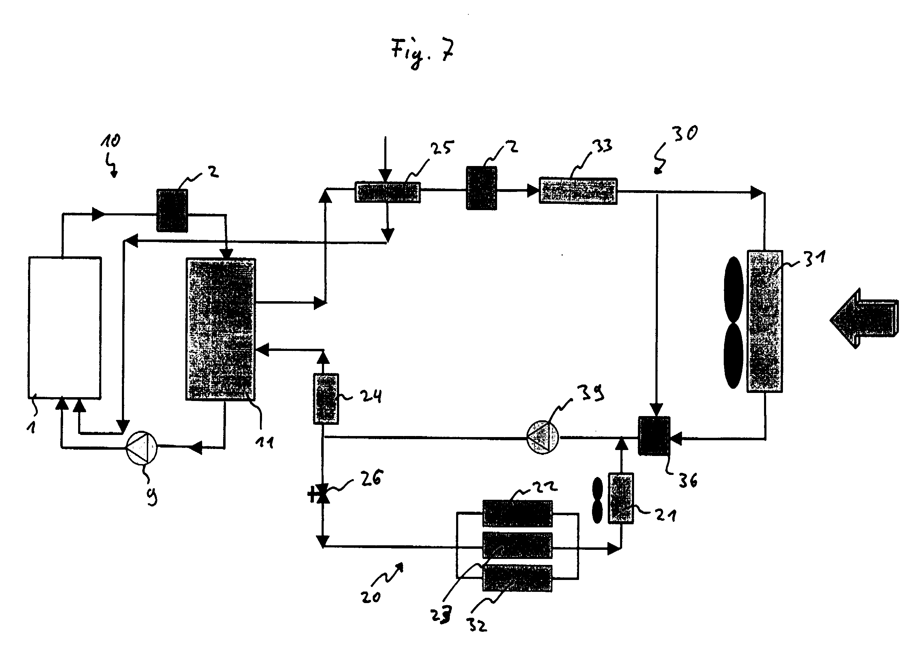

In Figur 7 ist eine weitere bevorzugte Ausführungsform eines erfindungsgemäßen Kühl-Heiz-Kreises dargestellt, welcher sich von der Konzeption deutlich von den vorangegangenen Ausführungsformen unterscheidet. Auch bei dieser Ausführungsform sind entsprechende Bestandteile mit entsprechenden Bezugszeichen versehen. Der erste Teilkreis 30 enthält wiederum einen Kühler 31 von klassischem Aufbau, der mittels eines Lüfters beaufschlagbar ist. Flußabwärtsliegend des Kühlers 30 ist eine elektrische Pumpe 39 angeordnet, die das Kühlmittel fördert. Nach der elektrischen Pumpe 39 tritt das Kühlmittel in einen Abgaskondensator, in dem die wasserdampfhaltigen Abgase einer Brennstoffzelle 1 kondensiert werden. Nach dem Abgaskondensator wird die Brennstoffzelle 1 unter Zwischenschaltung eines Wärmeübertragers 11 gekühlt, wonach ein Brennstoffkühler 25 und ein Heiz-Wärmetauscher 33 durchströmt werden. Der zweite Teilkreis 20 ist in der vorliegenden Ausführungsform als Kühlbypass ausgebildet, der einen thermischen Regelkreis bildet. Zu diesem Zweck ist flußabwärts liegend der Pumpe 39 eine Verzweigung ausgebildet. In dem zweiten Kühlkreis 20 ist nach der Verzweigung ein Dosierventil 26 vorgesehen, so daß die Förderleistung der elektrischen Pumpe 39 steuerbar anteilig auf den zweiten Teilkreis 20 verzweigt werden kann. In der dargestellten Ausführungsform umfaßt der zweite Teilkreis 20 den Kondensator 22 einer Klimaanlage, den Ladeluftkühler 23 und den Elektromotor 32 nebst zugeordnetem Inverter. Wie dargestellt, sind die vorangehend genannten Aggregate parallel geschaltet in dem zweiten Teilkreis 20 vorgesehen. Nach dem Durchströmen der genannten Aggregate tritt das Fluid des zweiten Teilkreises 20 in einen dezentralen Kühler 21, wonach das gekühlte Fluid flußaufwärts liegend der elektrischen Pumpe 39 in den ersten Teilkreis 30 zurückgespeist wird. Durch die Ausbildung des zweiten Teilkreises 20 als thermischer Regelkreis kann die Eintrittstemperatur für den Abgaskondensator 24 in geeigneter Weise eingestellt werden, wobei, wie bei den vorangegangenen Ausführungsformen lediglich eine elektrische Pumpe 39 zum Fördern der Fluide beider Teilkreise erforderlich ist. Bei der hier dargestellten Ausführungsform wird somit ein niedriges Temperaturniveau in dem zweiten Teilkreis 20 aufrechterhalten, so daß der Kondensator 22 der Klimaanlage in geeigneter Weise gekühlt werden kann, wobei vor allem eingangsseitig des Abgaskondensators eine Temperatur von ca. 55 °C bewerkstelligt werden kann. Obwohl in der in Figur 7 dargestellten Ausführungsform die Aggregate des zweiten Teilkreises 20 parallel geschaltet dargestellt sind, ist auch eine teilweise oder insgesamte Serienschaltung derselben möglich.

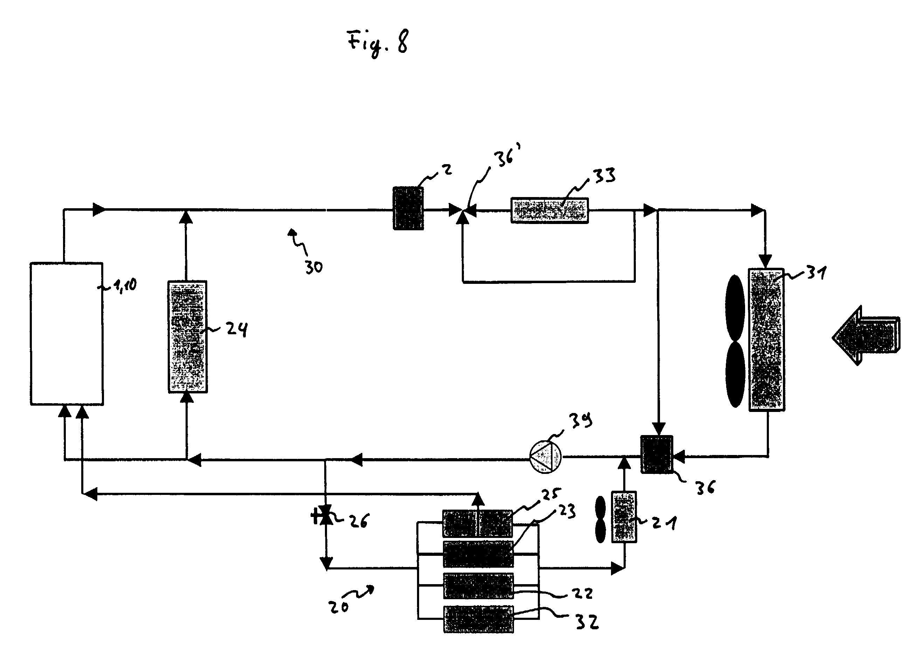

Figur 8 zeigt eine Ausführungsvariante zu der in Figur 7 gezeigten Ausführungsform, wobei ebenfalls ein zweiter Teilkreis 20 als Regelkreis dem ersten Teilkreis 30 zugeordnet ist. Bei der hier dargestellten Ausführungsform wird die Brennstoffzelle 1 als zu kühlendes Aggregat 10 unmittelbar mit dem Kühlmittel gekühlt, welches in den ersten und zweiten Teilkreisen 20, 30 zirkuliert. Wie auch bei den vorangegangenen Ausführungsformen umfaßt der erste Teilkreis 30 einen Abgaskondensator 24, welcher bei der dargestellten Ausführungsform bezüglich der Brennstoffzelle parallel geschaltet ist. In der dargestellten Ausführungsform enthält der erste Teilkreis 30 neben der Brennstoffzelle 1 und dem Abgaskondensator 24 noch einen Heizwärmetauscher 33, mit dem der Fahrzeuginnenraum gekühlt werden kann. Der Heizwärmetauscher 33 ist mit einer Bypassleitung bereitgestellt, die es einerseits ermöglicht, den Heizwärmetauscher zu umgehen, wenn keine Beheizung des Fahrgastinnenraumes gewünscht ist, und andererseits das Kühlmittel bei hoher Temperatur in dem Heizwärmetauscher 33 mehrfach zirkulieren zu lassen.

In dem zweiten Teilkreis 20 sind der Brennstoffkühler 25, der Ladeluftkühler 23, der Kondensator einer Klimaanlage und der Elektromotor 32 mit zugeordnetem Inverter in Parallelschaltung angeordnet.

Neben den Vorteilen, die gemäß der in Figur 7 gezeigten Ausführungsform erhalten werden, zeichnet sich die hier dargestellte Ausführungsform dadurch aus, daß für die zu kühlende Brennstoffzelle 1 und den Abgaskondensator im wesentlichen dasselbe Temperaturniveau vorliegt, so daß die Temperatureinstellung, die sowohl über die Pumpe 39 als auch das Einstellventil 26 eingestellt werden kann, vereinfacht ist. Ferner kann durch die Parallelschaltung der zu kühlenden Aggregate im zweiten Teilkreis 20 ebenfalls eine vereinfachte Steuerung erzielt werden, wobei durch die Parallelanordnung die einzelnen Aggregate im wesentlichen keinen thermischen Einfluß aufeinander ausüben.

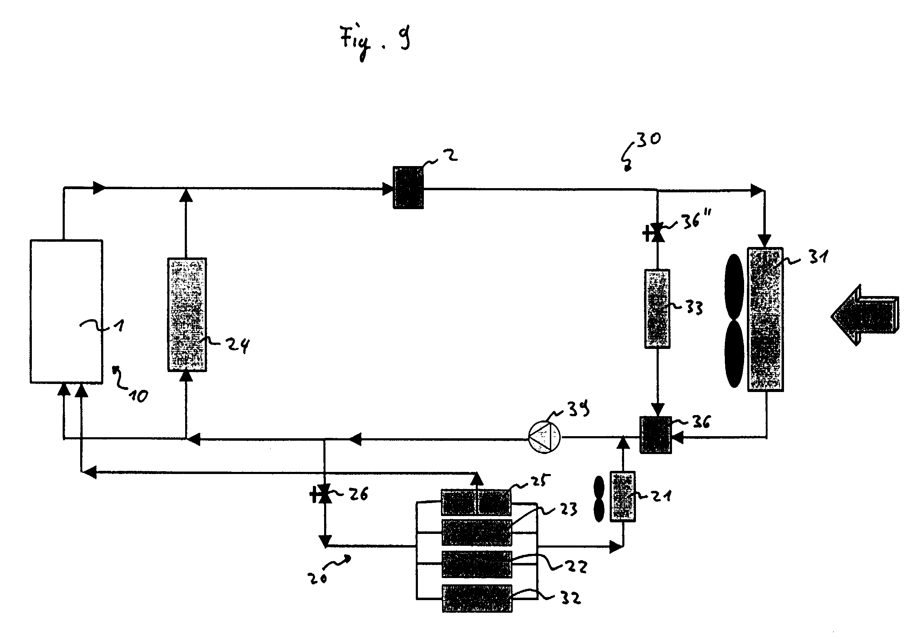

Figur 9 zeigt schließlich noch eine weitere Ausführungsvariante zu der in Figur 7 gezeigten Ausführungsform, wobei entsprechende Bestandteile mit denselben Bezugszeichen versehen sind. Zur knapperen Darstellung sollen detaillierte Beschreibung der bereits beschriebenen Komponenten nicht wiederholt werden. Die Ausführungsvariante gemäß Figur 9 entspricht im wesentlichen bezüglich der zu kühlenden Aggregate dem Aufbau von Figur 8, wobei jedoch der Heizwärmetauscher 33 bezüglich dem Kühler 31 in dem ersten Teilkreis 30 parallel geschaltet vorgesehen ist, wobei ein Dosierventil 36" eine eingestellte Beaufschlagung desselben gewährleistet. Es sollte erwähnt werden, daß zusätzlich auch eine Bypassleitung für den Heizwärmetauscher 33 vorgesehen sein kann, ähnlich wie es in Figur 8 dargestellt ist. Ferner ist zu verstehen, daß, obwohl die Einstellventile 26, 36" als Leitungsventile dargestellt sind, diese ebenfalls als 3-Wege-Ventile an den jeweiligen Leitungskreuzungen ausgebildet sein könnten, wobei auch weitere Einstellventile vorgesehen sein könnten, z.B. an der Verzweigung des ersten Teilkreises 30 hin zu der Brennstoffzelle 1 und dem Abgasverdampfer 24, so daß beispielhaft eine zufriedenstellende Kühlung der Brennstoffzelle zu Lasten des Abgaskondensators bewirkt werden kann, sollte die Brennstoffzelle ein kritisches Temperaturniveau erreichen.

Obwohl die vorliegende Erfindung im vorangegangenen beispielhaft und vollständig unter Bezugnahme auf derzeit bevorzugte Ausführungsformen beschrieben wurde, sollte der Fachmann erkennen, daß noch eine Vielzahl an Veränderungsmöglichkeiten im Rahmen der Ansprüche verbleibt. Insbesondere sollte der Fachmann erkennen, daß einzelne Merkmale einer Ausführungsform beliebig mit Merkmalen anderer Ausführungsformen kombinierbar sind. Entsprechend sollte auch erwähnt werden, daß, obwohl vorliegend lediglich zwei Teilkreise beschrieben wurden, auch eine beliebige Anzahl an Teilkreisen möglich ist, insoweit erfindungsgemäß eine strömungsmechanische Kopplung zwischen zumindest zwei Teilkreisen vorliegt. Schließlich ist zu erwähnen, daß das erfindungsgemäße Prinzip auch auf andere zu kühlende Aggregate Anwendung finden kann.

Zusammenfassend läßt sich jedenfalls feststellen, daß mit der erfindungsgemäßen Lösung eine deutlich verbesserte Kühlung von unterschiedlichsten Aggregaten von unterschiedlicher Temperatur und/oder thermischer Leistung ermöglicht ist, ohne daß der erforderliche Bauraum oder die Zahl an erforderlichen Bauteilen übermäßig erhöht wird.

## Patentansprüche

1. Kühl-Heiz-Kreis für ein Fahrzeug mit zumindest zwei Teilkreisen (20, 30), die zumindest abschnittsweise bei unterschiedlichen Temperaturen vorliegen und jeweils zumindest einen Kühler (21, 31) enthalten, um jeweils zumindest ein Aggregat (10, 22, 23, 24, 25, 32, 33) zu kühlen, dadurch gekennzeichnet, daß die Teilkreise (20, 30) strömungsmechanisch miteinander gekoppelt sind.

2. Kühl-Heiz-Kreis nach Anspruch 1, dadurch gekennzeichnet, daß die Teilkreise (20, 30) über eine gemeinsame Pumpe (39), zwei Pumpen (29, 39') mit gemeinsamem Antrieb oder über eine Einrichtung (29, 39", 39"') miteinander gekoppelt sind, die, ausgehend von der Strömung, in einem Teilkreis (20, 30) eine Strömung in einem anderen Teilkreis (20, 30) bewirkt.

3. Kühl-Heiz-Kreis nach Anspruch 1 oder 2, dadurch gekennzeichnet, daß die Teilkreise (20, 30) über Mittel (37, 37') verfügen , die eine Temperaturübertragung ermöglichen, insbesondere einen gemeinsamen Leitungsabschnitt (37').

4. Kühl-Heiz-Kreis nach einem der vorangegangenen Ansprüche, dadurch gekennzeichnet, daß die Kopplung und/oder Temperaturübertragung zwischen Teilkreisen (20, 30) steuerbar ist.

5. Kühl-Heiz-Kreis nach einem der vorangegangenen Ansprüche, dadurch gekennzeichnet, daß ein Teilkreis (20, 30) bezüglich einem anderen Teilkreis als Regelkreis zugeordnet ist.

6. Kühl-Heiz-Kreis nach einem der vorangegangenen Ansprüche, dadurch gekennzeichnet, daß zumindest eines der zu kühlenden Aggregate (10, 22, 23, 24, 25, 32, 33) eine Brennstoffzelle (1) umfaßt, insbesondere unter Zwischenschaltung eines Wärmeübertragers (11) für die Zuordnung zu einem der Teilkreise (20, 30).

7. Kühl-Heiz-Kreis nach einem der vorangegangenen Ansprüche, dadurch gekennzeichnet, daß zumindest eines der zu kühlenden Aggregate (10, 22, 23, 24, 25, 32, 33) ein Kondensator (22) einer Klimaanlage ist, insbesondere an der kühlsten Stelle des Kühl-Heiz-Kreises angeordnet.

8. Kühl-Heiz-Kreis nach einem der vorangegangenen Ansprüche, dadurch gekennzeichnet, daß zumindest zwei, insbesondere jeweils zwei zu kühlende Aggregate (10, 23, 24, 25) aus der Gruppe Ladeluftkühler (23), Brennstoffzelle(nwärmeübertrager) (10, 1, 11), Abgaskondensator (24) und Brennstoffkühler (25) in einem Teilkreis (20, 30) unmittelbar in Serie geschaltet sind.

9. Kühl-Heiz-Kreis nach einem der vorangegangenen Ansprüche, dadurch gekennzeichnet, daß zumindest zwei, insbesondere drei zu kühlende Aggregate (22, 23, 25, 32) aus der Gruppe Ladeluftkühler (23), Klimaanlagenkondensator (22), Brennstoffkühler (25), Inverter und Elektromotor (32) in einem Teilkreis (20, 30) parallel geschaltet sind.

10. Kühl-Heiz-Kreis nach einem der vorangegangenen Ansprüche, dadurch gekennzeichnet, daß zumindest ein, insbesondere zwei zu kühlende(s) Aggregat(e) (22, 23, 24) aus der Gruppe Klimaanlagenkondensator (22), Abgaskondensator (24) und Ladeluftkühler (23) dem zu kühlenden Aggregat mit der höchsten thermischen Leistung vorgeschaltet ist/sind.

11. Heiz-Klimaanlage nach einem der vorangegangenen Ansprüche, dadurch gekennzeichnet, daß ein, insbesondere zwei zu kühlende(s) Aggregat(e) (22, 23, 24) aus der Gruppe Klimaanlagenkondensator (22), Abgaskondensator (24) und Ladeluftkühler (23) in einem Teilkreis (20, 30) angeordnet ist/sind, der nicht das zu kühlende Aggregat mit der höchsten thermischen Leistung enthält.

12. Kühl-Heiz-Kreis nach einem der vorangegangenen Ansprüche, dadurch gekennzeichnet, daß die Kühler (21, 31) in voneinander getrennten Luftkanälen angeordnet sind.
